# EUROPÄISCHE PATENTSCHRIFT

(11) **EP 3 011 210 B1**
(45) Veröffentlichungstag und Bekanntmachung des Hinweises auf die Patenterteilung: **09.08.2017**
(21) Anmeldenummer: 14728588.6
(22) Anmeldetag: 10.06.2014
(51) Int. Cl.: F16K 31/06

(54) **VENTILVORRICHTUNG**
VALVE APPARATUS
DISPOSITIF FORMANT SOUPAPE

(30) Priorität: 20.06.2013 DE 102013211649
(43) Veröffentlichungstag der Anmeldung: 27.04.2016
(73) Patentinhaber: Robert Bosch GmbH, 70442 Stuttgart (DE)
(72) Erfinder: SALUSTIO, Sergio, Varo, Oliveira, Loureiro, P-3800-344 Aveiro (PT); VIEIRA, Ricardo, Jorge de Sousa, P-4470-526 Maia (PT); SIMOES, Mauro, P-3770-059 Num 10 B 3 DTO (PT); MONTEIRO, Luis, P-3810-474 Aveiro (PT)
(86) Internationale Anmeldenummer: PCT/EP2014/061962
(87) Internationale Veröffentlichungsnummer: WO 2014/202423

(56) Entgegenhaltungen:
- DE-A1- 10 361 918
- US-A1- 2004 051 608
- US-A1- 2005 188 811
- US-A1- 2007 113 906

## Beschreibung

### Stand der Technik

Es sind bereits Ventilvorrichtungen mit einem Verschlusselement zu einem Verschließen und/oder zu einem Öffnen einer Fluiddurchlassöffnung eines Brennerfluideinlasses, mit einer Betätigungseinheit zu einer Betätigung des Verschlusselements und mit einer Leiterplatte zu einer Aufnahme zumindest einer Steuer- und/oder Regelelektronik bekannt. Das Dokument US 2007/113906 A1 beschreibt eine Ventilvorrichtung gemäß dem Oberbegriff von Anspruch 1.

### Offenbarung der Erfindung

Die Erfindung geht aus von einer Ventilvorrichtung, insbesondere von einer Gasbrennerventilvorrichtung, für Heiz- und/oder Warmwasservorrichtungen (darunter fallen auch Heizgeräte, Heizkessel, Durchlauferhitzer, Trinkwarmwasserbereiter), mit zumindest einem Verschlusselement zu einem Verschließen und/oder zu einem Öffnen zumindest einer Fluiddurchlassöffnung zumindest eines Brennerfluideinlasses, mit zumindest einer Betätigungseinheit zu einer Betätigung des Verschlusselements und mit zumindest einer Leiterplatte zu einer Aufnahme zumindest einer Steuer- und/oder Regelelektronik.

Es wird vorgeschlagen, dass die Betätigungseinheit und das Verschlusselement an der Leiterplatte, insbesondere direkt an der Leiterplatte, angeordnet sind. Unter einer "Ventilvorrichtung" soll hier insbesondere eine Vorrichtung zu einer Absperrung und/oder zu einer Regelung eines Durchflusses von Fluiden durch einen Kanal bzw. durch eine Öffnung verstanden werden. Bevorzugt wird das Fluid von einem Gas, zum Beispiel einem Brenngas, gebildet. Es ist jedoch auch denkbar, dass das Fluid von einer Flüssigkeit, zum Beispiel einem Flüssigbrennstoff wie Heizöl, gebildet wird. Der Begriff "Verschlusselement" definiert hier insbesondere ein Element, das dazu vorgesehen ist, infolge einer Bewegung eine Fluiddurchlassöffnung zu öffnen und/oder zu schließen. Somit ist das Verschlusselement vorzugsweise beweglich gelagert. Unter "vorgesehen" soll insbesondere speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Der Ausdruck "beweglich gelagert" soll hier insbesondere eine Lagerung einer Einheit und/oder eines Elements definieren, wobei die Einheit und/oder das Element eine Bewegungsmöglichkeit entlang zumindest einer Strecke größer als 0,1 mm, bevorzugt größer als 0,5 mm und besonders bevorzugt größer als 1 mm aufweist und/oder eine Bewegungsmöglichkeit um zumindest eine Achse um einen Winkel größer als 5°, bevorzugt größer als 10° und besonders bevorzugt größer als 15° aufweist. Vorzugsweise ist das Verschlusselement zumindest im Wesentlichen parallel zu einer Fluidströmungsrichtung des Fluides beweglich gelagert. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Es ist jedoch auch denkbar, dass das Verschlusselement entlang einer anderen, einem Fachmann als sinnvoll erscheinenden Bewegungsrichtung bzw. Bewegungsachse beweglich gelagert ist. Das Verschlusselement kann hierbei als Kugelverschlusselement, als Kegelverschlusselement, als Flächenverschlusselement, wie beispielsweise als Membran, usw. ausgebildet sein. Bevorzugt ist das Verschlusselement direkt an der Leiterplatte befestigt, insbesondere ohne Zwischenschaltung weiterer Funktionselemente der Ventilvorrichtung, wie beispielsweise einem Gehäuse, einem Rahmen usw.

Unter einer "Betätigungseinheit" soll hier insbesondere eine Einheit verstanden werden, die mittels einer Einwirkung einer Betätigungskraft auf zumindest ein Element, insbesondere das Verschlusselement, zumindest das Element betätigt bzw. von einer Position in eine weitere Position bewegt. Hierbei kann die Betätigungseinheit als mechanische, als elektrische und/oder als magnetische Betätigungseinheit ausgebildet sein. Besonders bevorzugt ist die Betätigungseinheit zumindest teilweise auf einer Oberfläche der Leiterplatte angeordnet. Hierbei ist zumindest ein Element, insbesondere ein Betätigungskrafterzeugungselement, der Betätigungseinheit direkt an der Leiterplatte befestigt. Es ist jedoch auch denkbar, dass die Betätigungseinheit zumindest teilweise in die Leiterplatte eingebettet ist bzw. in ein Grundmaterial der Leiterplatte eingegossen ist. Mittels der erfindungsgemäßen Ausgestaltung kann vorteilhaft eine besonders kompakte Ventilvorrichtung realisiert werden. Hierdurch kann vorteilhaft eine Anordnung der Ventilvorrichtung in einem Gaszuführkanal erfolgen bzw. innerhalb des Gaszuführkanals nach einem Gassicherheitsventil. Somit kann vorteilhaft Bauraum eingespart werden. Das Verschlusselement ist als Membran ausgebildet, die als Federelement wirkt. Somit ist die Membran federelastisch ausgebildet. Unter "federelastisch" soll insbesondere eine Eigenschaft zumindest eines Elements verstanden werden, die eine wiederholte Verformbarkeit des Elements definiert, ohne dass das Element durch eine Verformung mechanisch beschädigt oder zerstört wird, wobei das Element nach einer Verformung selbstständig wieder einer Grundform bzw. einer Ausgangsform zustrebt. Besonders bevorzugt wirkt eine Federkraft der als Federelement wirkenden Membran in Richtung der Fluidströmungsrichtung des Fluides. Mittels der erfindungsgemäßen Ausgestaltung der Ventilvorrichtung kann vorteilhaft ein selbsttätiges Verschließen der Fluiddurchlassöffnung nach einem Wegfall einer auf das Verschlusselement wirkenden Betätigungskraft erreicht werden. Somit kann vorteilhaft eine hohe Sicherheit der Ventilvorrichtung erreicht werden, da die Ventilvorrichtung unabhängig von einer Energieversorgung zuverlässig ein Verschließen der Fluiddurchlassöffnung ermöglicht.

Ferner wird vorgeschlagen, dass die Betätigungseinheit zumindest ein ferromagnetisches Betätigungselement umfasst, das an der Membran angeordnet ist. Das Betätigungselement kann hierbei an der Membran fixiert sein oder direkt in ein Material der Membran eingebracht sein. Vorzugsweise ist das Betätigungselement an der Membran fixiert. In einer alternativen Ausgestaltung der Ventilvorrichtung ist das Betätigungselement zu einer Bildung einer elektroaktiven Polymermembran einteilig mit der Membran ausgebildet. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Mittels der erfindungsgemäßen Ausgestaltung kann vorteilhaft eine konstruktiv einfache Betätigung des Verschlusselements ermöglicht werden. Insbesondere kann vorteilhaft eine Betätigung des Verschlusselements bei einem geringen zur Verfügung stehenden Bauraum ermöglicht werden. Somit kann vorteilhaft eine Mikroventilvorrichtung realisiert werden.

Zudem wird vorgeschlagen, dass die Betätigungseinheit zumindest ein Magnetkrafterzeugungselement umfasst, das auf der Leiterplatte angeordnet ist. Besonders bevorzugt ist das Magnetkrafterzeugungselement als Spule, insbesondere als Flachspule, ausgebildet, die auf der Leiterplatte angeordnet ist. Hierbei bildet vorzugsweise zumindest eine spiralförmig angeordnete Leiterbahn der Leiterplatte das Magnetkrafterzeugungselement. Es ist jedoch auch denkbar, dass das Magnetkrafterzeugungselement als Elektromagnet ausgebildet ist, der direkt auf der Leiterplatte angeordnet ist. Andere, einem Fachmann als sinnvoll erscheinende Ausgestaltungen des Magnetkrafterzeugungselements sind ebenfalls denkbar. Mittels der erfindungsgemäßen Ausgestaltung kann vorteilhaft eine widerstandsfähige Betätigungseinheit erreicht werden. Zudem kann die Betätigungseinheit somit vorteilhaft eine kompakte Bauweise aufweisen.

Des Weiteren wird vorgeschlagen, dass das Verschlusselement, die Betätigungseinheit und die Leiterplatte zusammen eine Baugruppeneinheit bilden. Somit sind das Versschlusselement, die Betätigungseinheit und die Leiterplatte vorzugsweise gemeinsam, insbesondere in einem Arbeitsschritt, in oder an einer Gasbrennervorrichtung montierbar. Hierbei können mehrere Verschlusselemente und mehrere Betätigungseinheiten an der Leiterplatte angeordnet sein, die zusammen die Baugruppeneinheit bilden. Der Ausdruck "Baugruppeneinheit" soll hier insbesondere einen Aufbau einer Einheit definieren, bei der mehrere Bauteile vormontiert werden und die Einheit als Ganzes in einem Gesamtsystem, insbesondere in einer Gasbrennervorrichtung, verbaut wird. Die Baugruppeneinheit weist bevorzugt zumindest ein Befestigungselement auf, das dazu vorgesehen ist, die Baugruppeneinheit mit dem Gesamtsystem lösbar zu verbinden. Vorteilhafterweise kann die Baugruppeneinheit insbesondere mit weniger als 10 Befestigungselementen von dem Gesamtsystem demontiert werden, bevorzugt mit weniger als 8 Befestigungselementen und besonders bevorzugt mit weniger als 5 Befestigungselementen. Die Befestigungselemente sind besonders bevorzugt als Schrauben ausgebildet. Es ist jedoch auch denkbar, dass die Befestigungselemente als andere, einem Fachmann als sinnvoll erscheinende Elemente, wie beispielsweise als Schnellspannelemente, als werkzeuglos betätigbare Befestigungselemente usw., ausgebildet sind. Vorzugsweise kann zumindest eine Funktion der Baugruppeneinheit in einem von dem Gesamtsystem demontierten Zustand gewährleistet werden. Mittels der erfindungsgemäßen Ausgestaltung der Ventilvorrichtung kann vorteilhaft ein breites Einsatzspektrum erreicht werden. Eine Integration in bereits bestehende Gasbrennervorrichtungen kann ferner konstruktiv einfach erreicht werden. Des Weiteren können somit Produktionskosten und Montageaufwand vorteilhaft gering gehalten werden.

Ferner wird vorgeschlagen, dass die Leiterplatte innerhalb des Verschlusselements angeordnet ist. Vorzugsweise umgibt das Verschlusselement zumindest teilweise die Leiterplatte. Der Begriff "innerhalb" soll hier insbesondere eine räumliche Anordnung eines Elements relativ zu einem weiteren Element definieren, wobei das Element eine Erstreckung aufweist, die geringer ist als eine Erstreckung des weiteren Elements und sich das Element entlang zumindest einer Richtung, insbesondere entlang zumindest zwei Richtungen, nicht über das weitere Element hinaus erstreckt. Besonders bevorzugt überlappt das Verschlusselement die Leiterplatte an zumindest zwei Seiten, insbesondere an zumindest zwei sich abgewandten Seiten. Der Begriff "überlappen" soll hier insbesondere eine räumliche Anordnung von einem Element relativ zu einem weiteren Element definieren, wobei zumindest eine Flächennormale des Elements und/oder des weiteren Elements das Element und das weitere Element schneidet. Vorzugsweise liegt das Verschlusselement direkt an der Leiterplatte an. Hierbei ist es denkbar, dass die Leiterplatte Aufnahmeausnehmungen aufweist, in der das Verschlusselement zumindest teilweise angeordnet ist. Mittels der erfindungsgemäßen Ausgestaltung kann vorteilhaft eine kompakte Ausgestaltung der Ventilvorrichtung realisiert werden. Zudem kann vorteilhaft ein Schutz gegen eine Verschmutzung der Leiterplatte ermöglicht werden. Somit kann vorteilhaft eine hohe Lebensdauer der Ventilvorrichtung erzielt werden.

Zudem wird vorgeschlagen, dass die Betätigungseinheit als elektromagnetische Betätigungseinheit, als piezoelektrische Betätigungseinheit oder als dielektrisch elektroaktive Polymerbetätigungseinheit ausgebildet ist, die dazu vorgesehen ist, das Verschlusselement zumindest in eine Öffnungsposition zu bewegen. Bevorzugt ist die Betätigungseinheit als elektromagnetische Betätigungseinheit ausgebildet, bei der ein Magnetkrafterzeugungselement direkt auf der Leiterplatte angeordnet ist. In einer alternativen Ausgestaltung ist die Betätigungseinheit als piezoelektrische Betätigungseinheit oder als dielektrische elektroaktive Polymerbetätigungseinheit ausgebildet, bei der das Verschlusselement selbst ein Betätigungselement bildet bzw. einteilig mit dem Betätigungselement ausgebildet ist. Mittels der erfindungsgemäßen Ausgestaltung kann vorteilhaft eine konstruktiv einfache Ansteuerung des Verschlusselements realisiert werden. Zudem kann vorteilhaft eine präzise Einstellung eines Durchflusses ermöglicht werden.

Des Weiteren geht die Erfindung aus von einer Gasbrennervorrichtung mit zumindest einem Brennerfluideinlass und mit zumindest einer erfindungsgemäßen Ventilvorrichtung. Der Brennerfluideinlass ist hierbei direkt vor einem Brennraum der Gasbrennervorrichtung angeordnet. Die Gasbrennervorrichtung kann hierbei als Lamellenbrenner, als wassergekühlter Lamellenbrenner, als Keramikbrenner, als Segmentbrenner, als Metallfolienbrenner, als Metall- oder Keramikfaserbrenner oder als andere, einem Fachmann als sinnvoll erscheinende Gasbrennervorrichtung ausgebildet sein. Mittels der erfindungsgemäßen Ausgestaltung kann vorteilhaft eine effiziente Gasbrennervorrichtung realisiert werden. Zudem kann vorteilhaft eine Gasbrennervorrichtung realisiert werden, die eine kompakte Bauweise aufweist.

Ferner wird vorgeschlagen, dass die Ventilvorrichtung, betrachtet entlang der Fluidströmungsrichtung des Fluides, vor der Fluiddurchlassöffnung des Brennerfluideinlasses angeordnet ist. Somit kann vorteilhaft eine präzise Ansteuerung von einzelnen Brennersegmenten bzw. von einzelnen Brennerlamellen bzw. von einzelnen Brennerräumen bzw. von einzelnen Brennerbereichen erreicht werden. Somit kann vorteilhaft eine effektive Gasbrennervorrichtung realisiert werden.

Zudem geht die Erfindung aus von einer Heiz- und/oder Warmwasservorrichtung mit zumindest einer erfindungsgemäßen Gasbrennervorrichtung. Die Heiz- und/oder Warmwasservorrichtung kann hierbei als Warmwassertherme, als Zentralheizungsvorrichtung (Zentralheizungsboiler usw.), als Gas-Brennwertkesselvorrichtung, als Aufwärts-Brennwertkesselvorrichtung oder als andere, einem Fachmann als sinnvoll erscheinenden Heiz- und/oder Warmwasservorrichtung ausgebildet sein. Mittels der erfindungsgemäßen Ausgestaltung kann vorteilhaft eine effizient arbeitende Heiz- und/oder Warmwasservorrichtung erreicht werden.

Die erfindungsgemäße Ventilvorrichtung, die erfindungsgemäße Gasbrennervorrichtung und/oder die erfindungsgemäße Heiz- und/oder Warmwasservorrichtung soll/sollen hierbei nicht auf die oben beschriebene Anwendung und Ausführungsform beschränkt sein. Insbesondere können/kann die erfindungsgemäße Ventilvorrichtung, die erfindungsgemäße Gasbrennervorrichtung und/oder die erfindungsgemäße Heiz- und/oder Warmwasservorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Heiz- und/oder Warmwasservorrichtung mit einer erfindungsgemäßen Gasbrennervorrichtung in einer schematischen Darstellung,
- Fig. 2: eine Explosionsansicht der erfindungsgemäßen Gasbrennervorrichtung mit einer erfindungsgemäßen Ventilvorrichtung in einer schematischen Darstellung,
- Fig. 3: eine Schnittansicht der erfindungsgemäßen Gasbrennervorrichtung mit der erfindungsgemäßen Ventilvorrichtung in einer schematischen Darstellung,
- Fig. 4: eine Detailansicht einer alternativen erfindungsgemäßen Ventilvorrichtung in einem geschlossenen Zustand in einer schematischen Darstellung und
- Fig. 5: eine weitere Detailansicht der alternativen erfindungsgemäßen Ventilvorrichtung in einem geöffneten Zustand in einer schematischen Darstellung.

### Beschreibung der Ausführungsbeispiele

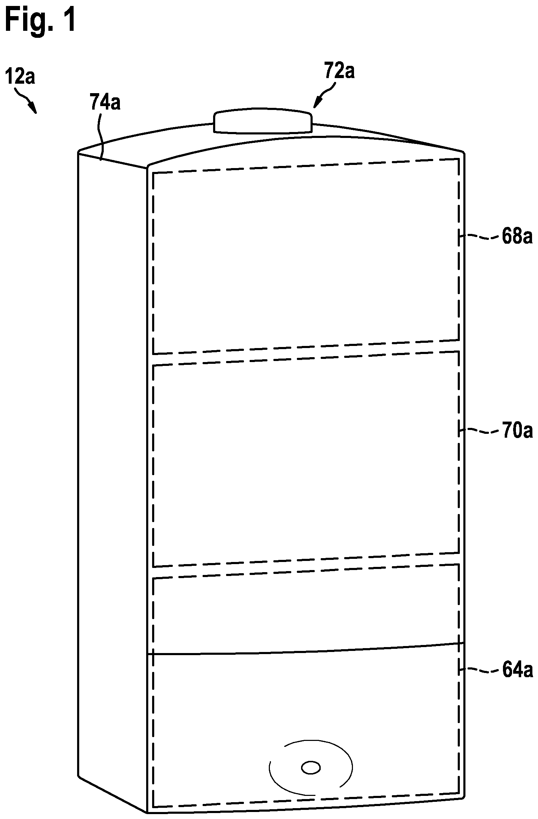

Figur 1 zeigt eine Heiz- und/oder Warmwasservorrichtung 12a mit zumindest einer Gasbrennervorrichtung 64a. Ferner umfasst die Heiz- und/oder Warmwasservorrichtung 12a eine Wärmeübertragervorrichtung 68a, die eine Sekundärwärmeübertragervorrichtung der Heiz- und/oder Warmwasservorrichtung 12a bildet. Zusätzlich zur Wärmeübertragervorrichtung 68a weist die Heiz- und/oder Warmwasservorrichtung 12a eine Primärwärmeübertragervorrichtung 70a auf. Mittels der Gasbrennervorrichtung 64a wird eine durch die Primärwärmeübertragervorrichtung 70a geleitete Flüssigkeit, insbesondere Wasser (zum Beispiel Heizungswasser oder Trinkwasser), auf eine, einem Fachmann bereits bekannte Art und Weise erwärmt. Ein durch die Erwärmung der Flüssigkeit mittels der Gasbrennervorrichtung 64a erzeugter Abgasstrom bzw. ein durch die Erwärmung der Flüssigkeit mittels der Gasbrennervorrichtung 64a erzeugtes Abgas wird hierbei zu einer Latentwärmenutzung auf eine, einem Fachmann bereits bekannte Art und Weise durch die Wärmeübertragervorrichtung 68a geleitet. Somit ist die Wärmeübertragervorrichtung 68a, betrachtet entlang des Abgasstroms, zwischen der Primärwärmeübertragervorrichtung 70a und einer Abgassammel- und/oder Abgasableitungseinheit 72a der Heiz- und/oder Warmwasservorrichtung 12a angeordnet. Die Gasbrennervorrichtung 64a, die Primärwärmeübertragervorrichtung 70a, die Wärmeübertragervorrichtung 68a und die Abgassammel- und/oder Abgasableitungseinheit 72a sind in einem montierten Zustand der Heiz- und/oder Warmwasservorrichtung 12a zusammen in einer Gehäuseeinheit 74a der Heiz- und/oder Warmwasservorrichtung 12a angeordnet. Eine Funktion der Heiz- und/oder Warmwasservorrichtung 12a erfolgt auf eine, einem Fachmann bereits bekannte Art und Weise.

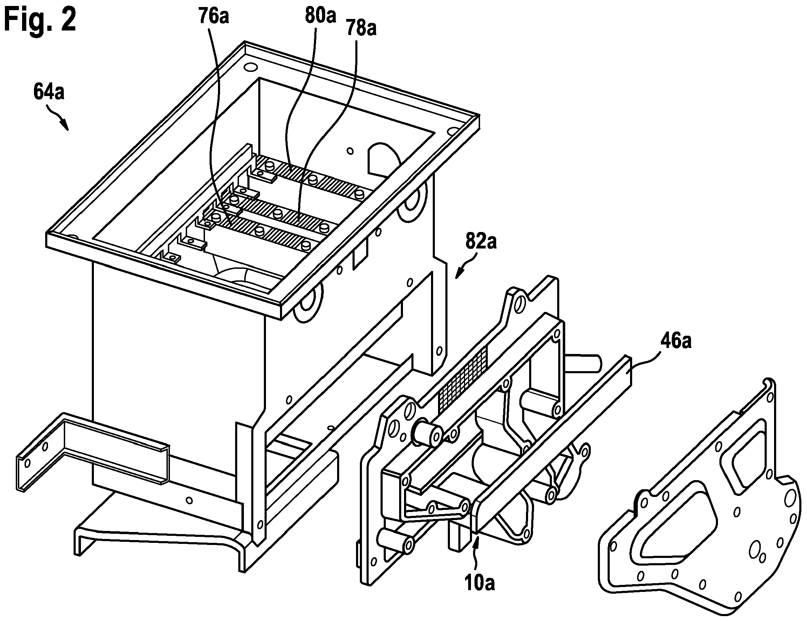

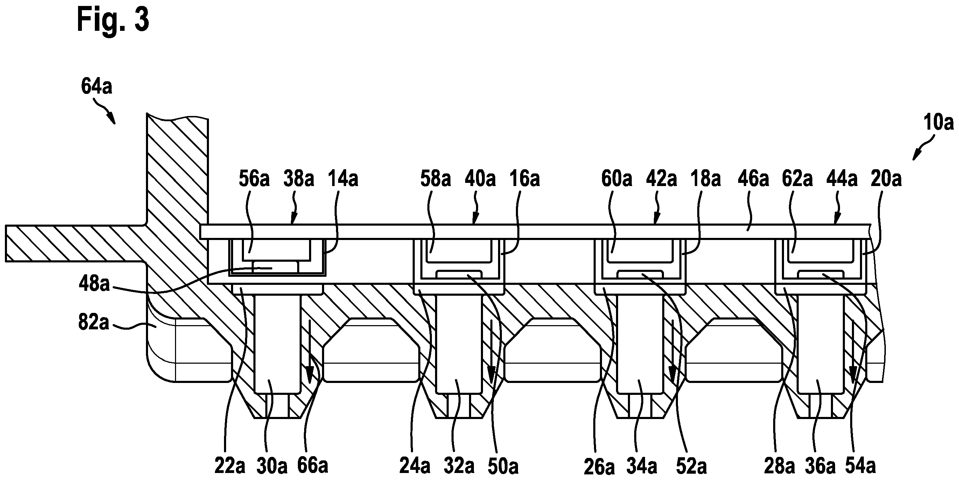

Figur 2 zeigt die Gasbrennervorrichtung 64a in einer schematisch dargestellten Explosionsansicht. Die Gasbrennervorrichtung 64a umfasst zumindest einen Brennerfluideinlass 30a, 32a, 34a, 36a (Figur 3) und zumindest eine Ventilvorrichtung 10a. Insgesamt weist die Gasbrennervorrichtung 64a eine Vielzahl an Brennerfluideinlässen 30a, 32a, 34a, 36a auf. Eine Anzahl an Brennerfluideinlässen 30a, 32a, 34a, 36a ist abhängig von einer Anzahl an Brennersegmenten 76a, 78a, 80a der Gasbrennervorrichtung 64a bzw. ist abhängig von einer Anzahl an Brennerlamellen der Gasbrennervorrichtung 64a zu einer Erzeugung von Flammen. Die Brennersegmente 76a, 78a, 80a bzw. die Brennerlamellen sind hierbei in einer Rahmeneinheit 82a der Gasbrennervorrichtung 64a angeordnet. Zudem weisen die Brennersegmente 76a, 78a, 80a bzw. die Brennerlamellen hierbei eine, einem Fachmann bereits bekannte Ausgestaltung auf. Somit wird hier nicht näher auf eine Ausgestaltung der Brennersegmente 76a, 78a, 80a bzw. der Brennerlamellen eingegangen.

In Figur 3 sind zu einer Erläuterung einer Funktion der Gasbrennervorrichtung 64a bzw. der Ventilvorrichtung 10a vier Brennerfluideinlässe 30a, 32a, 34a, 36a der Gasbrennervorrichtung 64a dargestellt. Die Ventilvorrichtung 10a ist als Gasbrennerventilvorrichtung ausgebildet. Hierbei umfasst die Ventilvorrichtung 10a zumindest ein Verschlusselement 14a, 16a, 18a, 20a zu einem Verschließen und/oder zu einem Öffnen zumindest einer Fluiddurchlassöffnung 22a, 24a, 26a, 28a zumindest eines Brennerfluideinlasses der Brennerfluideinlässe 30a, 32a, 34a, 36a. Ferner umfasst die Ventilvorrichtung 10a zumindest eine Betätigungseinheit 38a, 40a, 42a, 44a zu einer Betätigung des Verschlusselements 14a, 16a, 18a, 20a und zumindest eine Leiterplatte 46a zu einer Aufnahme zumindest einer Steuer- und/oder Regelelektronik der Ventilvorrichtung 10a. Hierbei sind das Verschlusselement 14a, 16a, 18a, 20a und die Betätigungseinheit 38a, 40a, 42a, 44a an der Leiterplatte 46a angeordnet. Insgesamt weist die Ventilvorrichtung 10a eine Vielzahl an Verschlusselementen 14a, 16a, 18a, 20a zu einem Verschließen und/oder zu einem Öffnen von Fluiddurchlassöffnungen 22a, 24a, 26a, 28a auf. Eine Anzahl an Verschlusselementen 14a, 16a, 18a, 20a ist abhängig von einer Anzahl an Brennerfluideinlässen 30a, 32a, 34a, 36a. In Figur 3 sind zu einer Erläuterung einer Funktion der Ventilvorrichtung 10a vier Verschlusselemente 14a, 16a, 18a, 20a der Ventilvorrichtung 10a dargestellt. Ferner weist die Ventilvorrichtung 10a insgesamt eine Vielzahl an Betätigungseinheiten 38a, 40a, 42a, 44a zu einer Betätigung der Verschlusselemente 14a, 16a, 18a, 20a auf. Eine Anzahl an Betätigungseinheiten 38a, 40a, 42a, 44a ist abhängig von einer Anzahl an Verschlusselementen 14a, 16a, 18a, 20a bzw. an Brennerfluideinlässen 30a, 32a, 34a, 36a. In Figur 3 sind zu einer Erläuterung einer Funktion der Ventilvorrichtung 10a vier Betätigungseinheiten 38a, 40a, 42a, 44a der Ventilvorrichtung 10a dargestellt.

Die Betätigungseinheiten 38a, 40a, 42a, 44a und die Verschlusselemente 14a, 16a, 18a, 20a sind hierbei an der Leiterplatte 46a angeordnet. Die Leiterplatte 46a ist im Bereich der Brennerfluideinlässe 30a, 32a, 34a, 36a mittels Befestigungselementen (hier nicht näher dargestellt) der Gasbrennervorrichtung 64a angeordnet, insbesondere entlang einer Fluidströmungsrichtung 66a des Fluides vor den Fluiddurchlassöffnungen 22a, 24a, 26a, 28a der Brennerfluideinlässe 30a, 32a, 34a, 36a. Somit ist die Ventilvorrichtung 10a, betrachtet entlang der Fluidströmungsrichtung 66a des Fluides, vor den Fluiddurchlassöffnungen 22a, 24a, 26a, 28a der Brennerfluideinlässe 30a, 32a, 34a, 36a angeordnet. Die Verschlusselemente 14a, 16a, 18a, 20a sind jeweils als Membran ausgebildet, die als Federelement wirken. Es ist jeweils einer Fluiddurchlassöffnung 22a, 24a, 26a, 28a jeweils ein Verschlusselement 14a, 16a, 18a, 20a zugeordnet. Hierbei wirkt eine Federkraft jedes einzelnen als Membran ausgebildeten und als Federelement wirkenden Verschlusselements 14a, 16a, 18a, 20a entlang der Fluidströmungsrichtung 66a des Fluides in Richtung der jeweiligen Fluiddurchlassöffnung 22a, 24a, 26a, 28a.

Zu einer Betätigung zumindest eines als Membran ausgebildeten Verschlusselements 14a, 16a, 18a, 20a umfasst die jeweilige Betätigungseinheit 38a, 40a, 42a, 44a zumindest jeweils ein ferromagnetisches Betätigungselement 48a, 50a, 52a, 54a, das an der jeweiligen Membran angeordnet ist. Die ferromagnetischen Betätigungselemente 48a, 50a, 52a, 54a sind jeweils direkt an dem jeweiligen Verschlusselement 14a, 16a, 18a, 20a, das als Membran ausgebildet ist, angeordnet. Hierbei sind die ferromagnetischen Betätigungselemente 48a, 50a, 52a, 54a mittels einer formschlüssigen, mittels einer kraftschlüssigen und/oder mittels einer stoffschlüssigen Verbindung am jeweiligen Verschlusselement 14a, 16a, 18a, 20a fixiert. In einer alternativen, hier nicht dargestellten Ausgestaltung der Ventilvorrichtung 10a sind die ferromagnetischen Betätigungselemente 48a, 50a, 52a, 54a einteilig mit dem jeweiligen Verschlusselement 14a, 16a, 18a, 20a ausgebildet. Somit sind die ferromagnetischen Betätigungselemente 48a, 50a, 52a, 54a in der alternativen Ausgestaltung direkt in einen Werkstoff des jeweiligen als Membran ausgebildeten Verschlusselements 14a, 16a, 18a, 20a eingebracht.

Des Weiteren umfassen die Betätigungseinheiten 38a, 40a, 42a, 44a jeweils zumindest ein Magnetkrafterzeugungselement 56a, 58a, 60a, 62a, das auf der Leiterplatte 46a angeordnet ist. Somit sind die Betätigungseinheiten 38a, 40a, 42a, 44a jeweils als elektromagnetische Betätigungseinheit ausgebildet, die dazu vorgesehen ist, das jeweilige Verschlusselement 14a, 16a, 18a, 20a zumindest in eine Öffnungsposition zu bewegen. Die Magnetkrafterzeugungselemente 56a, 58a, 60a, 62a sind als Spulen ausgebildet, die an der Leiterplatte 46a angeordnet sind. Hierbei ist denkbar, dass die Betätigungseinheiten 38a, 40a, 42a, 44a noch zusätzlich zu den Magnetkrafterzeugungselementen 56a, 58a, 60a, 62a jeweils ein Eisenkernelement (hier nicht näher dargestellt) zu einer Verstärkung eines mittels des jeweiligen Magnetkrafterzeugungselements 56a, 58a, 60a, 62a erzeugbaren Magnetfelds umfassen. Die Magnetkrafterzeugungselemente 56a, 58a, 60a, 62a können als gewickelte Spulen ausgebildet sein, deren Enden direkt mit der Leiterplatte 46a verbunden sind oder als Spulen, die von zumindest einer spiralförmigen Leiterbahn der Leiterplatte 46a gebildet wird, gebildet sein.

In einem unbestromten Zustand der Magnetkrafterzeugungselemente 56a, 58a, 60a, 62a sind die jeweiligen Verschlusselemente 14a, 16a, 18a, 20a und die jeweiligen ferromagnetischen Betätigungselemente 48a, 50a, 52a, 54a relativ zu dem jeweiligen Magnetkrafterzeugungselement 56a, 58a, 60a, 62a beabstandet angeordnet. Somit sind die jeweiligen Fluiddurchlassöffnungen 22a, 24a, 26a, 28a durch die jeweiligen Verschlusselemente 14a, 16a, 18a, 20a verschlossen. Hierdurch kann ein Einströmen eines Fluides in den jeweiligen Brennraum der Gasbrennervorrichtung 64a vermieden werden. Infolge einer Bestromung der Magnetkrafterzeugungselemente 56a, 58a, 60a, 62a werden die ferromagnetischen Betätigungselemente 48a, 50a, 52a, 54a von dem jeweiligen Magnetkrafterzeugungselement 56a, 58a, 60a, 62a angezogen und somit von der jeweiligen Fluiddurchlassöffnung 22a, 24a, 26a, 28a weg bewegt. Die jeweiligen Verschlusselemente 14a, 16a, 18a, 20a werden infolge der Fixierung der ferromagnetischen Betätigungselemente 48a, 50a, 52a, 54a an dem jeweiligen Verschlusselement 14a, 16a, 18a, 20a ebenfalls von der jeweiligen Fluiddurchlassöffnung 22a, 24a, 26a, 28a weg bewegt. Hierbei wird das jeweilige als Membran ausgebildete Verschlusselement 14a, 16a, 18a, 20a elastisch verformt. Es wird ein Durchlass des Fluides durch die jeweilige Fluiddurchlassöffnung 22a, 24a, 26a, 28a in den jeweiligen Brennraum ermöglicht. Zudem ist in Abhängigkeit einer Stärke einer Bestromung der Magnetkrafterzeugungselemente 56a, 58a, 60a, 62a eine Bewegungsstrecke der einzelnen ferromagnetischen Betätigungselemente 48a, 50a, 52a, 54a bzw. der jeweiligen Verschlusselemente 14a, 16a, 18a, 20a bestimmbar. Die Magnetkrafterzeugungselemente 56a, 58a, 60a, 62a sind hierbei unabhängig voneinander ansteuerbar. Somit kann jede einzelne Fluiddurchlassöffnung 22a, 24a, 26a, 28a unabhängig geöffnet und/oder geschlossen werden. Nach einer Wegnahme der Bestromung der Magnetkrafterzeugungselemente 56a, 58a, 60a, 62a wird die jeweilige Fluiddurchlassöffnung 22a, 24a, 26a, 28a wieder durch das jeweilige Verschlusselement 14a, 16a, 18a, 20a infolge der federelastischen Ausgestaltung des jeweiligen Verschlusselements 14a, 16a, 18a, 20a verschlossen.

Das Verschlusselemente 14a, 16a, 18a, 20a, die Betätigungseinheiten 38a, 40a, 42a, 44a und die Leiterplatte 46a bilden zusammen eine Baugruppeneinheit. Die Baugruppeneinheit kann in einem Arbeitsschritt an oder in der Gasbrennervorrichtung 64a montiert werden.

In einer alternativen, hier nicht näher dargestellten Ausgestaltung der Ventilvorrichtung 10a sind die Betätigungseinheiten 38a, 40a, 42a, 44a entkoppelt von dem jeweiligen Magnetkrafterzeugungselement 56a, 58a, 60a, 62a ausgebildet und die Betätigungseinheiten 38a, 40a, 42a, 44a umfassen alternativ jeweils ein Piezobetätigungselement, das dazu vorgesehen ist, das jeweilige Verschlusselement 14a, 16a, 18a, 20a zumindest in eine Öffnungsposition zu bewegen. Somit sind die Betätigungseinheiten 38a, 40a, 42a, 44a in der alternativen, hier nicht dargestellten Ausgestaltung der Ventilvorrichtung 10a jeweils als piezoelektrische Betätigungseinheit ausgebildet. In einer weiteren alternativen, hier nicht dargestellten Ausgestaltung der Ventilvorrichtung 10a sind die Betätigungseinheiten 38a, 40a, 42a, 44a jeweils als dielektrisch elektroaktive Polymerbetätigungseinheit ausgebildet. Somit sind Betätigungselemente in der weiteren alternativen Ausgestaltung der Ventilvorrichtung 10a zu einer Bildung von elektroaktiven Polymermembranen jeweils einteilig mit den als Membran ausgebildeten Verschlusselementen 14a, 16a, 18a, 20a ausgebildet.

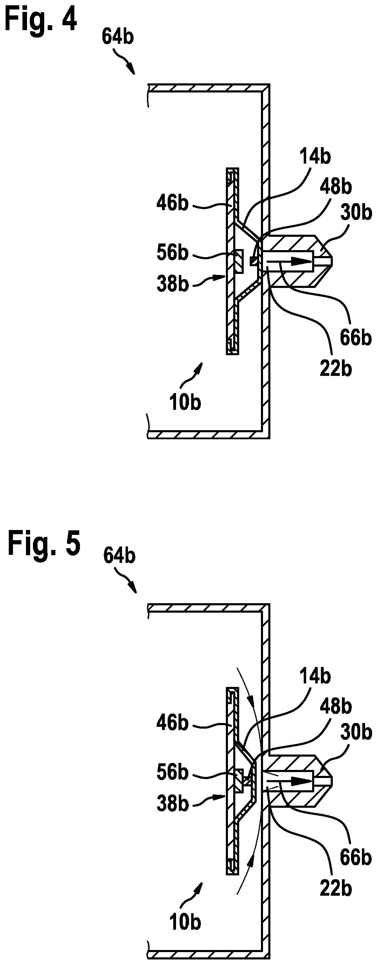

In Figuren 4 und 5 ist ein alternatives Ausführungsbeispiel dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und b hinzugefügt. Die nachfolgende Beschreibung beschränkt sich im Wesentlichen auf die Unterschiede zu dem in den Figuren 1 bis 3 beschriebenen, ersten Ausführungsbeispiel, wobei bezüglich gleichbleibender Bauteile, Merkmale und Funktionen auf die Beschreibung des ersten Ausführungsbeispiels in den Figuren 1 bis 3 verwiesen werden kann.

Figur 4 zeigt eine alternative Ventilvorrichtung 10b. Die Ventilvorrichtung 10b kann hierbei in einer Gasbrennervorrichtung (hier nicht näher dargestellt) angeordnet werden, die eine zu der in den Figuren 1 bis 3 beschriebenen Gasbrennervorrichtung 64a zumindest im Wesentlichen analoge Ausgestaltung aufweist. Die Ventilvorrichtung 10b umfasst zumindest ein Verschlusselement 14b zu einem Verschließen und/oder zu einem Öffnen zumindest einer Fluiddurchlassöffnung 22b zumindest eines Brennerfluideinlasses 30b, zumindest eine Betätigungseinheit 38b zu einer Betätigung des Verschlusselements 14b und zumindest eine Leiterplatte 46b zu einer Aufnahme zumindest einer Steuer- und/oder Regelelektronik. Die Betätigungseinheit 38b und das Verschlusselement 14b sind an der Leiterplatte 46b angeordnet. Hierbei ist das Verschlusselement 14b als Membran ausgebildet, die als Federelement wirkt.

Ferner weist die Betätigungseinheit 38b zumindest ein ferromagnetisches Betätigungselement 48b auf, das an der Membran angeordnet ist. Zudem umfasst die Betätigungseinheit 38b zumindest ein Magnetkrafterzeugungselement 56b, das auf der Leiterplatte 46b angeordnet ist. Somit ist die Betätigungseinheit 38b als elektromagnetische Betätigungseinheit ausgebildet, die dazu vorgesehen ist, das Verschlusselement 14b zumindest in eine Öffnungsposition zu bewegen. In Figur 4 ist das Magnetkrafterzeugungselement 56b in einem unbestromten Zustand dargestellt. In einem unbestromten Zustand des Magnetkrafterzeugungselements 56b ist die Fluiddurchlassöffnung 22b mittels des als Membran ausgebildeten Verschlusselements 14b verschlossen. In Figur 5 ist das Magnetkrafterzeugungselement 56b in einem bestromten Zustand dargestellt. Die Fluiddurchlassöffnung 22b ist hierbei infolge einer Verformung des als Membran ausgebildeten Verschlusselements 14b geöffnet.

Das Verschlusselement 14b, die Betätigungseinheit 38b und die Leiterplatte 46b bilden zusammen eine Baugruppeneinheit. Hierbei ist die Leiterplatte 46b innerhalb des als Membran ausgebildeten Verschlusselements 14b angeordnet. Das Verschlusselement 14b umgibt die Leiterplatte 46b zumindest teilweise. Hierbei überlappt das als Membran ausgebildete Verschlusselement 14b die Leiterplatte 46b an zumindest zwei sich abgewandten Seiten der Leiterplatte 46b zumindest in einem Teilbereich der Leiterplatte 46b. Ein Überlappen an vier entlang eines Umfangs direkt aneinander angrenzenden Seiten ist ebenfalls denkbar. Hinsichtlich weiteren Funktionen und Merkmalen der Ventilvorrichtung 10b darf auf die Beschreibung der Figuren 1 bis 3 verwiesen werden.

## Patentansprüche

1. Ventilvorrichtung, insbesondere Gasbrennerventilvorrichtung, für Heiz- und/oder Warmwasservorrichtungen, mit zumindest einem Verschlusselement (14a, 16a, 18a, 20a; 14b) zu einem Verschließen und/oder zu einem Öffnen zumindest einer Fluiddurchlassöffnung (22a, 24a, 26a, 28a; 22b) zumindest eines Brennerfluideinlasses (30a, 32a, 34a, 36a; 30b), mit zumindest einer Betätigungseinheit (38a, 40a, 42a, 44a; 38b) zu einer Betätigung des Verschlusselements (14a, 16a, 18a, 20a; 14b) und mit zumindest einer Leiterplatte (46a; 46b) zu einer Aufnahme zumindest einer Steuer- und/oder Regelelektronik, wobei die Betätigungseinheit (38a, 40a, 42a, 44a; 38b) und das Verschlusselement (14a, 16a, 18a, 20a; 14b) an der Leiterplatte (46a; 46b) angeordnet sind, **dadurch gekennzeichnet, dass** das Verschlusselement (14a, 16a, 18a, 20a; 14b) als Membran ausgebildet ist, die als Federelement wirkt.

2. Ventilvorrichtung nach Anspruch 1, **dadurch gekennzeichnet, dass** die Betätigungseinheit (38a, 40a, 42a, 44a; 38b) zumindest ein ferromagnetisches Betätigungselement (48a, 50a, 52a, 54a; 48b) umfasst, das an der Membran angeordnet ist.

3. Ventilvorrichtung zumindest nach einem der vorhergehenden Ansprüche, **dadurch gekennzeichnet, dass** die Betätigungseinheit (38a, 40a, 42a, 44a; 38b) zumindest ein Magnetkrafterzeugungselement (56a, 58a, 60a, 62a; 56b) umfasst, das auf der Leiterplatte (46a; 46b) angeordnet ist.

4. Ventilvorrichtung nach einem der vorhergehenden Ansprüche, **dadurch gekennzeichnet, dass** das Verschlusselement (14a, 16a, 18a, 20a; 14b), die Betätigungseinheit (38a, 40a, 42a, 44a; 38b) und die Leiterplatte (46a; 46b) zusammen eine Baugruppeneinheit bilden.

5. Ventilvorrichtung nach einem der vorhergehenden Ansprüche, **dadurch gekennzeichnet, dass** die Leiterplatte (46b) innerhalb des Verschlusselements (14b) angeordnet ist.

6. Ventilvorrichtung nach einem der vorhergehenden Ansprüche, **dadurch gekennzeichnet, dass** die Betätigungseinheit (38a, 40a, 42a, 44a; 38b) als elektromagnetische Betätigungseinheit, als piezoelektrische Betätigungseinheit oder als dielektrische elektroaktive Polymerbetätigungseinheit ausgebildet ist, die dazu vorgesehen ist, das Verschlusselement (14a, 16a, 18a, 20a; 14b) zumindest in eine Öffnungsposition zu bewegen.

7. Gasbrennervorrichtung mit zumindest einem Brennerfluideinlass (30a, 32a, 34a, 36a; 30b) und mit zumindest einer Ventilvorrichtung nach einem der vorhergehenden Ansprüche.

8. Gasbrennervorrichtung nach Anspruch 7, **dadurch gekennzeichnet, dass** die Ventilvorrichtung, betrachtet entlang einer Fluidströmungsrichtung (66a; 66b) des Fluides, vor der Fluiddurchlassöffnung (22a, 24a, 26a, 28a; 22b) des Brennerfluideinlasses (30a, 32a, 34a, 36a; 30b) angeordnet ist.

9. Heiz- und/oder Warmwasservorrichtung mit zumindest einer Gasbrennervorrichtung nach Anspruch 7 und/oder 8.

## Claims

1. Valve apparatus, in particular gas burner valve apparatus, for heating and/or hot water apparatuses, with at least one closure element (14a, 16a, 18a, 20a; 14b) for closing and/or for opening at least one fluid passage opening (22a, 24a, 26a, 28a; 22b) of at least one burner fluid inlet (30a, 32a, 34a, 36a; 30b), with at least one actuating unit (38a, 40a, 42a, 44a; 38b) for actuating the closure element (14a, 16a, 18a, 20a; 14b) and with at least one printed circuit board (46a; 46b) for accommodating at least one electronic control and/or regulating unit, wherein the actuating unit (38a, 40a, 42a, 44a; 38b) and the closure element (14a, 16a, 18a, 20a; 14b) are arranged on the printed circuit board (46a; 46b), **characterized in that** the closure element (14a, 16a, 18a, 20a; 14b) is designed as a membrane which acts as a spring element.

2. Valve apparatus according to Claim 1, **characterized in that** the actuating unit (38a, 40a, 42a, 44a; 38b) comprises at least one ferromagnetic actuating element (48a, 50a, 52a, 54a; 48b) which is arranged on the membrane.

3. Valve apparatus at least according to either of the preceding claims, **characterized in that** the actuating unit (38a, 40a, 42a, 44a; 38b) comprises at least one magnetic-force-generating element (56a, 58a, 60a, 62a; 56b) which is arranged on the printed circuit board (46a; 46b).

4. Valve apparatus according to one of the preceding claims, **characterized in that** the closure element (14a, 16a, 18a, 20a; 14b), the actuating unit (38a, 40a, 42a, 44a; 38b) and the printed circuit board (46a; 46b) together form an assembly unit.

5. Valve apparatus according to one of the preceding claims, **characterized in that** the printed circuit board (46b) is arranged within the closure element (14b).

6. Valve apparatus according to one of the preceding claims, **characterized in that** the actuating unit (38a, 40a, 42a, 44a; 38b) is designed as an electromagnetic actuating unit, as a piezoelectric actuating unit or as a dielectric electroactive polymer actuating unit which is provided to move the closure element (14a, 16a, 18a, 20a; 14b) at least into an opening position.

7. Gas burner apparatus with at least one burner fluid inlet (30a, 32a, 34a, 36a; 30b) and with at least one valve apparatus according to one of the preceding claims.

8. Gas burner apparatus according to Claim 7, **characterized in that** the valve apparatus is arranged upstream of the fluid passage opening (22a, 24a, 26a, 28a; 22b) of the burner fluid inlet (30a, 32a, 34a, 36a; 30b), as viewed along a fluid flow direction (66a; 66b) of the fluid.

9. Heating and/or hot water apparatus with at least one gas burner apparatus according to Claim 7 and/or 8.

## Revendications

1. Dispositif formant soupape, en particulier un dispositif formant soupape de brûleur à gaz, pour des dispositifs de chauffage et/ou à eau chaude, pourvu d'au moins un élément de fermeture (14a, 16a, 18a, 20a ; 14b) permettant de fermer et/ou d'ouvrir au moins un orifice de passage de fluide (22a, 24a, 26a, 28a ; 22b) d'au moins une entrée de fluide de brûleur (30a, 32a, 34a, 36a ; 30b), d'au moins une unité d'actionnement (38a, 40a, 42a, 44a ; 38b) permettant d'actionner l'élément de fermeture (14a, 16a, 18a, 20a ; 14b) et d'au moins une carte de circuit imprimé (46a ; 46b) destinée à recevoir au moins une électronique et commande et/ou de régulation, dans lequel l'unité d'actionnement (38a, 40a, 42a, 44a ; 38b) et l'élément de fermeture (14a, 16a, 18a, 20a ; 14b) sont disposés sur la carte de circuit imprimé (46a ; 46b), **caractérisé en ce que** l'élément de fermeture (14a, 16a, 18a, 20a ; 14b) est réalisé sous la forme d'une membrane qui agit en tant qu'élément à ressort.

2. Dispositif formant soupape selon la revendication 1, **caractérisé en ce que** l'unité d'actionnement (38a, 40a, 42a, 44a ; 38b) comprend au moins un élément d'actionnement ferromagnétique (48a, 50a, 52a, 54a ; 48b) qui est disposé sur la membrane.

3. Dispositif formant soupape selon au moins l'une des revendications précédentes, **caractérisé en ce que** l'unité d'actionnement (38a, 40a, 42a, 44a ; 38b) comprend au moins un élément générateur de force magnétique (56a, 58a, 60a, 62a ; 56b) qui est disposé sur la carte de circuit imprimé (46a ; 46b).

4. Dispositif formant soupape selon l'une quelconque des revendications précédentes, **caractérisé en ce que** l'élément de fermeture (14a, 16a, 18a, 20a ; 14b), l'unité d'actionnement (38a, 40a, 42a, 44a ; 38b) et la carte de circuit imprimé (46a ; 46b) forment ensemble une unité modulaire.

5. Dispositif formant soupape selon l'une quelconque des revendications précédentes, **caractérisé en ce que** la carte de circuit imprimé (46b) est disposée à l'intérieur de l'élément de fermeture (14b).

6. Dispositif formant soupape selon l'une quelconque des revendications précédentes, **caractérisé en ce que** l'unité d'actionnement (38a, 40a, 42a, 44a ; 38b) est réalisée sous la forme d'une unité d'actionnement électromagnétique, sous la forme d'une unité d'actionnement piézoélectrique ou sous la forme d'une unité d'actionnement à polymère électro-actif diélectrique, qui est conçue pour déplacer l'élément de fermeture (14a, 16a, 18a, 20a ; 14b) vers au moins une position d'ouverture.

7. Dispositif formant brûleur à gaz comportant au moins une entrée de fluide de brûleur (38a, 34a, 36a ; 30b) et au moins un dispositif formant soupape selon l'une quelconque des revendications précédentes.

8. Dispositif formant brûleur à gaz selon la revendication 7, **caractérisé en ce que** le dispositif formant soupape, observé dans une direction d'écoulement de fluide (66a ; 66b) du fluide est disposé en amont de l'ouverture de passage de fluide (22a, 24a, 26a, 28a ; 22b) de l'entrée de fluide de brûleur (30a, 32a, 34a, 36a ; 30b).

9. Dispositif de chauffage et/ou à eau chaude comportant au moins un dispositif formant brûleur à gaz selon la revendication 7 et/ou 8.
